Europäisches Patentamt

**European Patent Office**

Office européen des brevets

(19)

(11) Publication number: **0 070 600**
**A1**

# EUROPEAN PATENT APPLICATION

(12)

(21) Application number: **82200895.9**

(22) Date of filing: **14.07.82**

(51) Int. Cl.³: **A 23 K 1/00,** A 23 J 1/10,
B 30 B 9/06, A 23 N 17/00

(30) Priority: **17.07.81 NL 8103412**

(43) Date of publication of application: **26.01.83**
**Bulletin 83/4**

(84) Designated Contracting States: **AT BE CH DE FR GB IT
LI LU NL SE**

(71) Applicant: **STORK DUKE B.V., 7 Wijkermeerweg,
NL-1951 AH Velsen (N) (NL)**

(72) Inventor: **Bardie, Pierre Paul, 2 A. Rademakersstraat,
NL-1191 EK Ouderkerk a/d Amstel (NL)**

(74) Representative: **Mathol, Heimen, Ir. et al,
EXTERPATENT 3 & 4 Willem Witsenplein, NL-2596 BK
The Hague (NL)**

(54) **Method of processing feathers into meal and installation for performing said method.**

(57) In an installation for processing the feathers of slaughtered poultry into feather meal, one or more cookers 2, a matching drying apparatus 10 and a device for dehydrating 12 the feathers in the supply path 18 to the cookers 2, comprise a press 20 with a reciprocally moveable plunger 23 arranged in the supply path 18 of the feathers, the pressing channel 21 being provided with drainage openings 22.

Said pressing channel 21 comprising a retractable obstruction 26 in the form of a partition exerts a counter action during the pressing of the feathers.

-1-

Method of processing feathers into meal and installation for performing said method.

The invention relates to a method of processing feathers of slaughtered poultry into feather meal wherein feathers are supplied to a cooker after dehydration and are subjected to a thermal treatment, whereupon they are discharged as feather meal.

The invention also relates to an installation for performing the said method the installation being provided with one or more cookers with a matching drying apparatus and an apparatus situated in the feather inlet part for dehydrating the feathers.

Processing feathers obtained from slaughter houses for poultry into feather meal, occupies a special place in the processing of waste, as said feathers are processed in great quantities so that they become a commercially available product again. Said method of processing is either performed in a slaughter house for poultry or in a separate unit or installation to which the feathers coming from various different slaughter houses are supplied.

The feathers are in most cases supplied in a moist condition whereby the water ratio can be so great that the feathers first have to be drained so that they can be fed to the cookers as dry as possible.

Efforts have been made to press out the feathers by means of screw presses so that the feathers to be fed to the cookers only possess a slight quantity of water. However, the use of screw presses has appeared to be unsuitable as these presses proved to be non-paying.

-2-

It is an object of the invention to provide an improved method of processing feathers into feather meal, causing the feathers to be supplied to the cookers in a relatively dry condition.

According to the invention this is attained in that the wet feathers are pressed in a stepwise procedure for removal of the superfluous water and in that said feathers are fed to the cooker after having been pressed in a path for loosening them from each other. The feathers which are united to a package by the pressing procedure are to be loosened from said package before being fed to the cooker; however, as a result of the stepwise pressing procedure such loosening can very easily be performed. Pressing together relatively small quantitties of feathers may finally lead to a large quantity of feathers due to the stepwise pressing procedure; no high pressures need be used so that a simple pressing device may suffice.

An installation for performing the method according to the invention and provided with one or more cookers with a matching drying apparatus and a dehydrating apparatus provided in the feather inlet path towards the cookers, is according to the invention characterized in that a press with a reciprocating plunger is provided in the supply path of the feathers, the pressing space interacting with the plunger, being provided with draining apertures.

Preferably the pressing space interacting with the plunger is according to the invention, a pressing channel, the wall thereof being provided with an inlet opening for the feathers and apertures for a passage of water dripping from the pressed package of feathers.

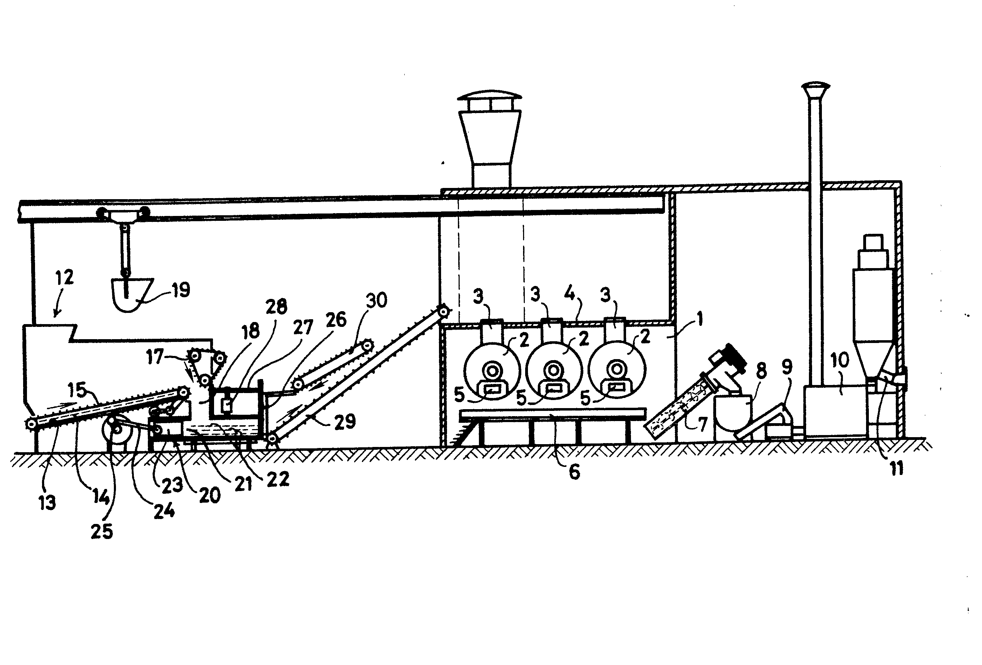

The invention will be explained with the aid of the accompanying drawing.

The drawing generally and schematically shows an installation for processing the feathers of slaughtered poultry into feather meal. The depicted embodiment illustrates a cooking space 1 in which three cookers 2 are provided. Said cookers are adapted to subject the

-3-

feathers to a high temperature so that they become desintegrated
and can be removed from the cookers as feather meal. Cooking is
performed after the feathers have been subjected to a drying procedure so that they contain little or no moisture. The cookers
have a closeable inlet shaft 3 extending at a loading floor 4.

The cookers are further provided with closeable discharge openings
5 which extend above a chute 6. A conveyor, preferably in the form of
a helical conveyor has been arranged in this chute 6, and ends
above a helical lift 7 for lifting up the feather meal to an
intermediate storage point 8. Via a conveyor 9 the feather meal
is conveyed from the intermediate storage point 8 to a final drying
device 10 and subsequently the feather meal is discharged via a
tube 11, for instance to a silo (not shown).

Feathers have to arrive at the loading floor 4 in a condition as
dry as possible and have to be pretreated as they are mostly supplied
in a moist condition.

Often feathers are supplied through a gutter at the event that a
waste treatment installation according to the illustrated embodiment
is directly connected to a slaughter house. On the other hand they
are supplied in a pulpy or pappy condition.

A draining floor is used in very simple installations upon which
the feathers arrived in containers are dumped owing to which the
superfluous water can flow away. A feather bunker is used in better
equipped installations as in the embodiment of the present invention,
said bunker being generally referenced 12.

Arrived feathers are dumped in this feather bunker which is provided with an inclined floor, preferably provided with a grate 14
thereupon. On this grate the feathers can be drained and be further
conveyed to the discharge end of the bunker by means of a scraper
conveyor 15. Furthermore the scraper conveyor 15 cooperates with a
discharge conveyor 17 in order to bring the feathers down in an
even state.

0070600

-4-

The discharge end 18 of the feather bunker merges into an inlet of
a press for pressing the still moist feathers.

The feather bunker 12 can be filled by means of a shovel hoist 19,
either from a lorry or from containers or from a dumping floor
arranged besides the bunker 12.

The  press for pressing out the feathers has been generally referenced 20. In the shown embodiment the press comprises a pressing
channel 21 running horizontally and having apertures  22 in its
wall for the passage of water. A plunger 23 which is coupled to a
rotatably driven crank 25 by means of a driving rod 24 is movable
in the pressing channel 21. An obstruction in the form of a partition
26 has been arranged, which partition may close off the end of the
pressing channel 21. The partition is movably driven by means of
a lever 27 and a driving member, for instance in the form of a
hydraulic or pneumatic cylinder -piston system 28, The stroke of
the plunger 23 is less than the length of the pressing channel in
which the pressing of the feathers is executed in a stepwise manner,
owing to which a shaking action is exerted on the feather package
in the pressing channel. A conveyor elevator 29 has been arranged
at the discharge end of the pressing channel 21, which elevator
has been shaped as a scraper conveyor which conveys the pressed
feathers to the level of the loading floor 4 so that at that point
the feathers can be fed to the filling shafts 3. A churning up
conveyor 30 cooperating with the conveyor elevator 29 runs in          -
opposite direction to loosen the feathers from the package expelled
from the press.

In the shown embodiment press 20 is situated below the discharge end of
the feather bunker; however, this is not necessary. The feather
press 20 can be also situated next to the feather bunker 12 and the
discharge end 18 of the feather bunker may be sloping laterally and
end above the filling shaft of the press 20. In the latter case
the press  can be directly fed with feathers by means of the shovel
hoist 19 or in another manner outside the feather bunker 12. The

-5-

feather bunker need even not be used or can be entirely omitted depending on the supplied kind of feathers.

The method according to the invention consists in that the moist feathers are pressed out step by step for a removal of excess water and in that the pressed out feathers are supplied to the cookers in a path in which they are loosened from each other. The feathers united into a package by the pressing action have to be loosened from the package prior to being fed to the cooker and the pressing procedure is exerted step by step in a pressing channel 21, an intermittant conveyance in this pressing channel being performed at every stroke of the plunger 23.

The installation for performing the method according to the invention is provided with one or more cookers 2 comprising a matching dryer 10 and a device in the supply path to the cookers 2 for dehydrating the feathers.

According to the invention the installation is embodied so that a press 20 with a reciprocating moveable plunger 23 is situated in the supply path the pressing space 21 co-operating with the plunger 23 being provided with draining apertures 22. The pressing space cooperating with the plunger is adapted as a pressing channel having in its wall a supply opening 18 for the feathers and openings 22 for the passage of water dripping from the pressed feathers. A retractable obstruction in the form of a partition is present at the pressing channel 21 for exerting a counter action during pressing the feathers.

The press is situated at the discharge side 18 of the draining device as elucidated above, in this case the discharge side of a feather bunker. The pressure channel 21 of the press ends at device 29, 30 for loosening the feathers being in this embodiment a conveying elevator 29 for conveying pressed feathers to the inlet openings of the shafts 3 of the cookers 2.

It is observed that the reference numerals in the claims are not intended to restrict the scope thereof, but are only denoted for clarification.

-1-

## CLAIMS

1. Method of processing feathers of slaughtered poultry into feather meal in which the supplied feathers after dehydration are conveyed to a cooker to be subjected to a thermal treatment whereupon they are discharged as feather meal, characterized in that the moist feathers are pressed together in a stepwise procedure for removal of the superfluous water and after pressing are conveyed to a cooker (2) in a path for loosening the feathers from each other.

2. Method according to claim 1, c haracterized in that the feathers united to a package by the pressing operation are loosened from the package prior to their supply to the cooker (2).

3. Method according to claim 1, characterized in that the pressing action is exerted by means of a shaking action within a pressing channel (21) while the conveyance of feathers in this pressure channel is performed intermittently.

4. Installation for performing the method according to one or more of claims 1-3, provided with one or more cookers (2) with a matching drying apparatus (10) and a device (12) for dehydrating the feathers in the supply path to the cookers, characterized in that a press (20) with a reciprocally moveable plunger (23) is arranged in the supply path (18) of the feathers while the pressing space (21) cooperating with the plunger (23) is provided with drainage openings (22).

5. Installation according to claim 4, characterized in that the pressing space cooperating with the plunger is a pressing channel (21) its wall comprising a supply opening for the feathers and openings (22) for passage of water dripping from the pressed feathers.

6. Installation according to claims 4 and 5, characterized in that the pressing channel (21) comprises a retractable obstruction (26) in the form of a partition for exerting a counter action during the pressing of the feathers.

7. Installation according to claim 4, characterized in that the press (20) is arranged at the discharge side (18) of the draining device (14).

8. Installation according to claim 7, characterized in that the press is arranged at the discharge side (18) of a feather bunker (12)

9. Installation according to one or several of claims 4-8, characterized in that the pressing channel (21) of the press (20) ends at a device (29, 30) for loosening the feathers.

10. Installation according to claim 9, characterized in that the device for loosening the feathers is a lifting conveyor (29) for conveying the pressed feathers to the inlet openings of the shafts (3) of the cookers (2).

0070600

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y | US-A-3 617 313 (B.S. HARRINGTON JR. and J. VOJACEK) * Column 1, lines 62-75; column 2, lines 1-27; column 3, lines 2-34 * | 1-10 | A 23 K 1/00 A 23 J 1/10 B 30 B 9/06 A 23 N 17/00 |
| Y | US-A-4 151 306 (M.A. WILLIAMS et al.) * Column 4, lines 46-68; column 5, lines 1-18 * | 1-10 | |
| Y | GB-A- 998 428 (MIBIS MERKANTILA INGENIÖRSBYRAN AB) * Page 1, lines 9-11, 62-83; figure 1 * | 4-8 | |
| Y | US-A-2 705 916 (BROR MANNE MILLGARD) * Claim; figure * | 4-8 | TECHNICAL FIELDS SEARCHED (Int. Cl. 3) A 23 K A 23 J B 30 B A 23 N |

The present search report has been drawn up for all claims

| Place of search | Date of completion of the search | Examiner |
|---|---|---|
| THE HAGUE | 15-10-1982 | GALLIGANI L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82